(19) Europäisches Patentamt / European Patent Office / Office européen des brevets

(11) **EP 4 411 584 A1**

(12) **EUROPEAN PATENT APPLICATION**
published in accordance with Art. 153(4) EPC

(43) Date of publication:
**07.08.2024 Bulletin 2024/32**

(21) Application number: **23814658.3**

(22) Date of filing: **21.02.2023**

(51) International Patent Classification (IPC):
**G06F 30/18** $^{(2020.01)}$ **G01C 21/32** $^{(2006.01)}$
**G01C 21/36** $^{(2006.01)}$

(52) Cooperative Patent Classification (CPC):
**G01C 21/32; G01C 21/36; G06F 3/00;**
G06F 2111/04

(86) International application number:
**PCT/CN2023/077329**

(87) International publication number:
**WO 2023/231459 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.05.2022 CN 202210612066**

(71) Applicant: **Tencent Technology (Shenzhen)
Company Limited
Shenzhen, Guangdong, 518057 (CN)**

(72) Inventor: **XIAO, Tongxing
Shenzhen, Guangdong 518057 (CN)**

(74) Representative: **EP&C
P.O. Box 3241
2280 GE Rijswijk (NL)**

(54) **METHOD FOR GENERATING INTERSECTION SURFACE AND RELATED APPARATUS**

(57)     A method for generating an intersection surface, an apparatus, a computer device, a readable storage medium, and a program product, which can be applied to the fields of maps and the like. An intersection surface of an intersection node can be efficiently and accurately generated, and the expansibility is high. The method for generating an intersection surface comprises: obtaining road information of a target intersection node; determining road surface width information of each road according to the road information; obtaining a constraint condition and a target function, the target function being used for indicating the size of a target area of an intersection surface of the target intersection node, the constraint condition being used for indicating a limiting condition of the size of the target area, and the constraint condition comprising a constraint relationship between offset variables of every two adjacent roads in at least two roads; determining an offset distance of a road according to the road surface width information of the road, the constraint condition, and the target function; and generating the intersection surface of the target intersection node in a map on the basis of the road surface width information of the road and the offset distance of the road.

Obtain road information of an intersection node, the road information indicating two roads connected to the intersection node — 301

Determine road surface width information of each of the at least two roads based on the road information — 302

Obtain a constraint condition and a target function, where the target function characterizes a size of an intersection surface of the intersection node, the target function includes an offset variable corresponding to each of the at least two roads, the offset variable indicates a distance between the intersection node and a cut-off line of the corresponding one of the at least two roads, the constraint condition is configured for constraining the size, and the constraint condition includes a constraint relationship between offset variables of every two adjacent roads among the at least two roads — 303

For each of the at least two roads, determine an offset distance of the respective road by using the target function and the constraint condition based on the road surface width information of the road — 304

Generate the intersection surface of the intersection node in a map based on the road surface width information of the road and the offset distance of the road — 305

FIG. 3

EP 4 411 584 A1

**Description**

RELATED APPLICATION

This application claims priority to Chinese Patent Application No. 2022106120660, filed with the China National Intellectual Property Administration on May 31, 2022, and entitled "METHOD FOR GENERATING INTERSECTION SURFACE AND RELATED APPARATUS ".

FIELD OF THE TECHNOLOGY

Embodiments of this application relate to the field of map and traffic technologies, and the like, and in particular, to the field of map data processing.

BACKGROUND OF THE DISCLOSURE

Currently, a map application provides a map that replicates a real world as much as possible. The map includes a large quantity of road networks. An intersection surface is an area in the map that represents space where an intersection is located. However, due to complexity of road intersection, it is usually difficult to draw a specific intersection surface.

In the related art, an offset distance of each road is usually preset, so that an intersection surface of an intersection node is calculated by using a pure geometric algorithm having a large calculation amount. However, due to factors such as an error in a road shape point, mutual coupling of associated geometric conditions, and poor scalability of the pure geometric algorithm, it is impossible to calculate an accurate intersection surface by using an existing pure geometric algorithm, especially for some scenarios with complex roads, and the intersection surface generated in an electronic map by using the existing pure geometric algorithm is more inaccurate.

SUMMARY

Embodiments of this application provide a method for generating an intersection surface and a related apparatus, to efficiently generate an intersection surface of an intersection node without relying on a complex pure geometric algorithm, and generate a more accurate intersection surface with strong scalability.

According to a first aspect, an embodiment of this application provides a method for generating an intersection surface, executable by a computer device, including:

obtaining road information of an intersection node, the road information indicating at least two roads connected to the intersection node;

determining road surface width information of each of the at least two roads based on the road information;

obtaining a constraint condition and a target function, the target function characterizing a size of an intersection surface of the intersection node, the target function including an offset variable corresponding to each of the at least two roads, the offset variable indicating a distance between the intersection node and a cut-off line of the corresponding one of the at least two roads, the constraint condition being configured for constraining the size, and the constraint condition including a constraint relationship between offset variables of every two adjacent roads among the at least two roads;

for each of the at least two roads, determining an offset distance of the respective road by using the target function and the constraint condition based on the road surface width information of the road; and

generating the intersection surface of the intersection node in a map based on the road surface width information of the road and the offset distance of the road.

According to a second aspect, an embodiment of this application provides an intersection surface generation apparatus. The intersection surface generation apparatus includes an obtaining unit and a processing unit.

The obtaining unit is configured to obtain road information of an intersection node, and the road information indicating at least two roads connected to the intersection node.

The processing unit is configured to determine road surface width information of each of the at least two roads based on the road information.

The obtaining unit is further configured to obtain a constraint condition and a target function, the target function characterizing a size of an intersection surface of the intersection node, the target function including an offset variable corresponding to each of the at least two roads, the offset variable indicating a distance between the intersection node and a cut-off line of the corresponding one of the at least two roads, the constraint condition being configured for constraining the size, and the constraint condition including a constraint relationship between offset variables of every two adjacent roads among the at least two roads.

The processing unit is further configured to, for each of the at least two roads, determine an offset distance of the respective road by using the target function and the constraint condition based on the road surface width information of the road, and generate the intersection surface of the intersection node in a map based on the road surface width information of the road and the offset distance of the road.

According to a third aspect, an embodiment of this application provides a computer device, including a processor and a memory. The memory is configured to store program instructions. The processor is configured to execute the program instructions stored in the memory, to perform the method for generating an intersection surface corresponding to the implementation of the first aspect.

According to a fourth aspect, an embodiment of this application provides a computer-readable storage medium, where the computer-readable storage medium stores instructions. When the instructions are run on a computer, the computer is enabled to perform the method for generating an intersection surface corresponding to the implementation of the first aspect.

According to a fifth aspect, an embodiment of this application provides a computer program product having instructions stored therein. When the computer program product runs on a computer or a processor, the computer or the processor is enabled to perform the method for generating an intersection surface corresponding to the implementation of the first aspect.

Based on the foregoing technical solutions, the embodiments of this application have the following advantages.

In the embodiments of this application, the road information of the intersection node is obtained, the road surface width information of each road connected to the intersection node is determined based on the road information, and the constraint condition and the target function are obtained, the target function being configured for indicating the size of the intersection surface of the intersection node, the constraint condition including the constraint relationship between the corresponding offset variables of every two adjacent roads in the at least two roads and being configured for indicating the limiting condition of the size, and the target function including an offset variable corresponding to each of the at least two roads connected to the intersection node. In this way, an offset distance of each road may be calculated based on the road surface width information of the road, the constraint condition, and the target function. Further, the intersection surface of the intersection node may be generated in the map based on the road surface width information of the road and the offset distance of the road. Through the foregoing manner, it is only necessary to construct the constraint condition based on the constraint relationship between the offset variables of adjacent roads, and calculate the offset distance of the road based on the road surface width information of the road, to generate the intersection surface of the intersection node efficiently and accurately without relying on the complex pure geometric algorithm. In some scenarios with complex roads, a corresponding accurate offset distance may be calculated by modifying the constraint condition, which is highly scalable and may be widely used in various map scenarios to generate the intersection surface efficiently and accurately in various map scenarios.

BRIEF DESCRIPTION OF THE DRAWINGS

FIG. 1 is a schematic diagram of an application scenario of a method for generating an intersection surface according to an embodiment of this application.

FIG. 2A is a schematic diagram of a single-node intersection according to an embodiment of this application.

FIG. 2B is a schematic diagram of a compound-node intersection according to an embodiment of this application.

FIG. 3 is a flowchart of a method for generating an intersection surface according to an embodiment of this application.

FIG. 4 is a schematic diagram of a road after widening according to an embodiment of this application.

FIG. 5 is a schematic diagram in which cut-off lines of a road intersect according to an embodiment of this application.

FIG. 6 is a schematic diagram of a relationship between offset distances according to an embodiment of this application.

FIG. 7 is a schematic diagram in which cut-off lines do not intersect or intersect at an endpoint of the cut-off lines according to an embodiment of this application.

FIG. 8 is a schematic diagram of an intersection surface according to an embodiment of this application.

FIG. 9 is a schematic diagram of an embodiment of an intersection surface generation apparatus according to an embodiment of this application.

FIG. 10 is a schematic diagram of a hardware structure of an intersection surface generation apparatus according to an embodiment of this application.

DESCRIPTION OF EMBODIMENTS

In the specific implementation of this application, specific products or technologies related to user information and other data may be involved. When embodiments of this application are applied to such specific products or technologies, user permission or consent needs to be obtained, and collection, use and processing of relevant data need to comply with relevant laws, regulations and standards of relevant countries and regions.

The following clearly and completely describes the technical solutions in embodiments of this application with reference to the accompanying drawings in embodiments of this application. It is clear that the described embodiments are some but not all of embodiments of this application. Based on embodiments of this application, all other embodiments obtained by a person of ordinary skill in the art without creative efforts fall within the protection scope of this application.

In the specification, claims, and accompanying drawings of this application, the terms "first", "second", "third", "fourth", and the like (if existent) are intended to distinguish between similar objects but are not necessarily intended to describe a specific order or sequence. It is to be understood that the data termed in such a way are interchangeable in proper circumstances, so that embodiments of this application described herein can be implemented in another order than the order illustrated or described herein. Moreover, the terms "include", "have", and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

An intersection surface is an area in an electronic map that represents space where an intersection is located. Generating accurate intersection surfaces can not only provide a navigation engine with base map data at an intersection and enhance a visualization effect of a navigation interface, but also provide data support for autonomous driving during decision-making at the intersection, or provide data support for an object (such as a driver) that uses the electronic map to make driving decisions, to prevent a vehicle from driving beyond an intersection range, reduce a probability of accidents occurred at the intersection, and improve driving safety.

A method for generating an intersection surface provided in this application relates to at least the following technologies, such as an intelligent transportation system, cloud computing, and a computer vision technology. For example, an intersection surface of an intersection node may be generated through road network data in the electronic map. In some examples, the intelligent transportation system may also be used to provide intelligent navigation route services for a driver and another driving object based on location information, contours, and the like of the intersection surface. Alternatively, a terminal device may also use the computer vision technology to display a high-precision three-dimensional image corresponding to the intersection surface in a navigation application page or a map page more truly and clearly.

In the related art, a pure geometric algorithm is usually relied on to calculate the intersection surface based on a preset offset distance of each road. However, due to factors such as poor scalability of the pure geometric algorithm and mutual coupling of associated geometric conditions, there is a large deviation between the intersection surface generated based on the pure geometric algorithm and an actual intersection area. In addition, existing intersection surfaces generated for lane-level navigation on the market are mainly based on high-precision map data. However, due to some restrictions, a coverage area of the high-precision map data is limited, and consequently, a corresponding intersection surface cannot be generated in an area not covered by the high-precision map data.

To resolve the foregoing technical problems, embodiments of this application provide a method for generating an intersection surface. The method does not need to rely on the pure geometric algorithm with poor scalability to generate an intersection surface of an intersection node, and the intersection surface generated based on the method provided in embodiments of this application has high accuracy and scalability. This is not only applicable to a high-precision map scenario, but also can obtain an effect similar to that brought by the high-precision map data for the area not covered by the high-precision map data.

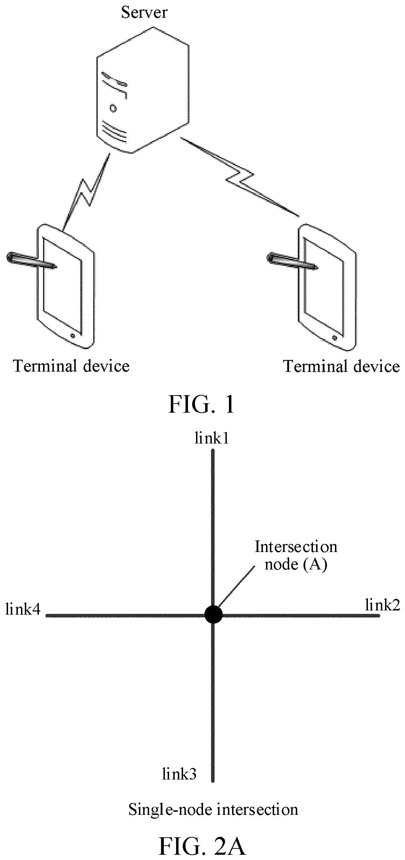

FIG. 1 is a schematic diagram of an application scenario of a method for generating an intersection surface according to this application. As shown in FIG. 1, the application scenario includes a server. For example, the application scenario may further include a terminal device, and the like. The described server may be a back-end server of an application program, and the application program is also installed on the terminal device. The terminal device and the server may interact data with each other based on the application program. The server may store road network data such as road information of an intersection node and road surface width information corresponding to each road, and then use the road network data to generate an intersection surface of the intersection node. For example, the server may send location information of the generated intersection surface to the terminal device, so that the terminal device may display the intersection surface based on the location information of the intersection surface.

In actual application, the road network data such as road information of an intersection node may also be stored in the terminal device, and the terminal device generates the intersection surface based on the road network data. An execution entity of generating the intersection surface is not limited in embodiments of this application. In the following embodiments of this application, description is made only by using an example in which the server is the execution entity.

In addition, the application program may be a map application, a navigation application, or any application program that supports display of a map page, such as a transportation application. The terminal device may be a vehicle-mounted terminal (such as a vehicle-mounted navigation terminal and a vehicle-mounted computer), a smartphone, a tablet computer, a notebook computer, a mobile internet device, a personal digital assistant (PDA), a desktop computer, a smart speaker, a smartwatch, or the like.

The server may be an independent physical server, or may be a server cluster or a distributed system including a plurality of physical servers, or may be a cloud server or a server cluster that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. The terminal device and the server may be connected directly or indirectly in a wired communication manner or a wireless communication manner. This application is not limited thereto. This may be specifically determined based on an actual application scenario, which is not limited herein.

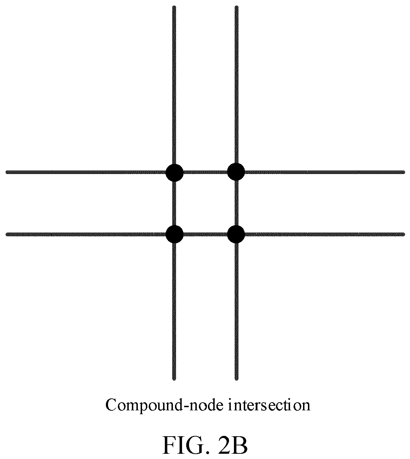

In addition, the intersection node described in FIG. 1 may be understood as an intersection where at least two roads intersect. An intersection may be understood as a location where at least two roads meet, and may generally be represented by several nodes. The intersection may be divided into a single-node intersection and a compound-node intersection based on a quantity of nodes included. Based on this, the intersection node may include a single-node intersection and a compound-node intersection. For example, FIG. 2A shows a schematic diagram of a single-node intersection according to an embodiment of this application. As shown in FIG. 2A, in a scenario where the intersection node is a single-node intersection, four roads from link1 to link4 converge at the same intersection (that is, a dot A in FIG. 2A). In another example, FIG. 2B is a schematic diagram of a compound-node intersection according to an embodiment of this application. As shown in FIG. 2B, in a scenario where the intersection node is a compound-node intersection, the compound-node intersection may include four single-node intersections. For each single-node intersection, four roads converge at the same intersection. For details, refer to the context in FIG. 2A for understanding. Details are not described herein again.

For the intersection nodes shown in FIG. 2A and FIG. 2B, a quantity of converged roads is 4, which is only an illustrative description. In actual application, 2, 3, 6, 10, or another quantity of roads may also be converged, which is not specifically limited in this application. In addition, the single-node intersection shown in FIG. 2A and the compound-node intersection shown in FIG. 2B only show a case in which links are perpendicular to each other. In actual application, there may also be a case in which links are not perpendicular to each other. This is not specifically limited in this application. In the following embodiments of this application, only an example in which links shown in FIG. 2A and FIG. 2B are mutually perpendicular to each other is used for description.

In addition, it can be learned from FIG. 2B that the compound-node intersection actually includes at least two single-node intersections. Therefore, in the subsequent description of the method for generating an intersection surface provided in this application, only an example in which the single-node intersection shown in FIG. 2A is used as the intersection node is used for detailed description. For a process of generating a corresponding intersection surface for the composite-node intersection, reference may also be specifically made to a process of generating an intersection surface of the single-node intersection. Details are not described again in embodiments of this application.

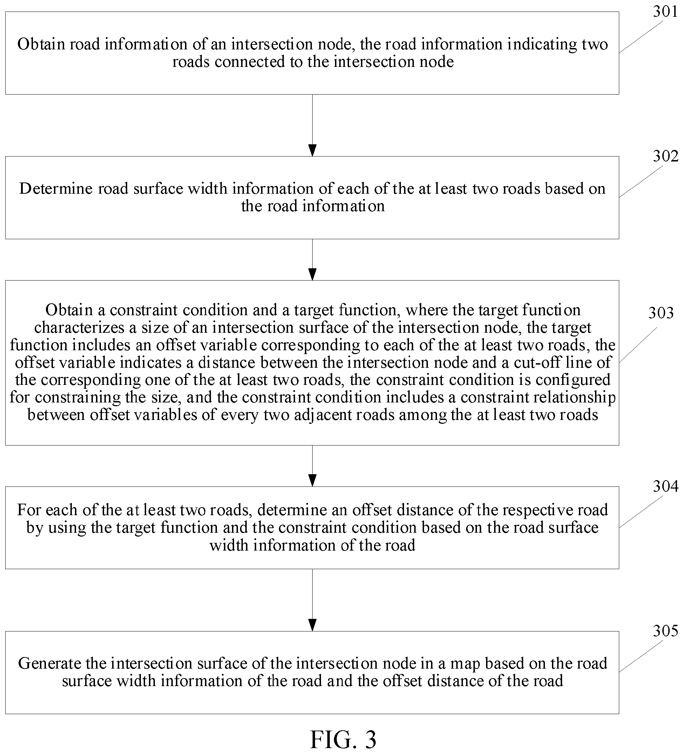

A scenario of the single-node intersection shown in FIG. 2A is used as an example. The following describes the method for generating an intersection surface provided in embodiments of this application with reference to the accompanying drawings. FIG. 3 shows a flowchart of a method for generating an intersection surface according to an embodiment of this application. The method may be performed by a computer device, such as the server or the terminal device in FIG. 1. As shown in FIG. 3, the method for generating an intersection surface may include the following steps: 301. Obtain road information of an intersection node, the road information indicating two roads connected to the intersection node.

In this example, the intersection node may be the single-node intersection shown in FIG. 2A, or may be the compound-node intersection shown in FIG. 2B. Details are not described herein again. The following is described merely by using an example in which the intersection node is the single-node intersection shown in FIG. 2A. For the intersection node, corresponding road information may be obtained, and a quantity of roads that converge to the intersection node may be obtained based on the road information. For example, the road information may indicate at least two roads that are jointly connected to the intersection node. For example, for the single-node intersection shown in FIG. 2A, road information of the single-node intersection may indicate 4 links, and the 4 links are jointly connected to the same intersection node A.

302. Determine road surface width information of each of the at least two roads based on the road information.

In this example, the road mentioned is generally represented by a line segment with no width in an ordinary navigation map. Before the intersection surface of the intersection node is generated, the line segment with no width needs to be widened into a road surface with a certain width. For example, the road surface width information of each road may be determined based on the road information, and the road surface width information may reflect a specific width of a road surface of the road. The road surface width information described may include but is not limited to the width of the road surface, and the like, which is not specifically limited in this application.

In some examples, for roads of different levels, corresponding road surfaces may be widened to have different widths. For example, in an urban road level, a road level of a trunk road is higher than that of a secondary trunk road, and the road level of the secondary trunk road is higher than that of a branch road. A higher road level indicates a wider road surface width of the corresponding road. For example, a road surface width of the trunk road is generally wider than that of the secondary trunk road, and the road surface width of the secondary trunk road is wider than that of the branch road. Based on this, a specific implementation process of determining the road surface width information of each road based on the road information in step 302 may be: determining a road level of each road based on the road information, and then determining the road surface width information of each road based on the road level of each road.

In addition, the road surface of each road includes a left side sub-road surface and a right side sub-road surface. Correspondingly, the road surface width information of the road may include width information of the left side sub-road surface and width information of the right side sub-road surface.

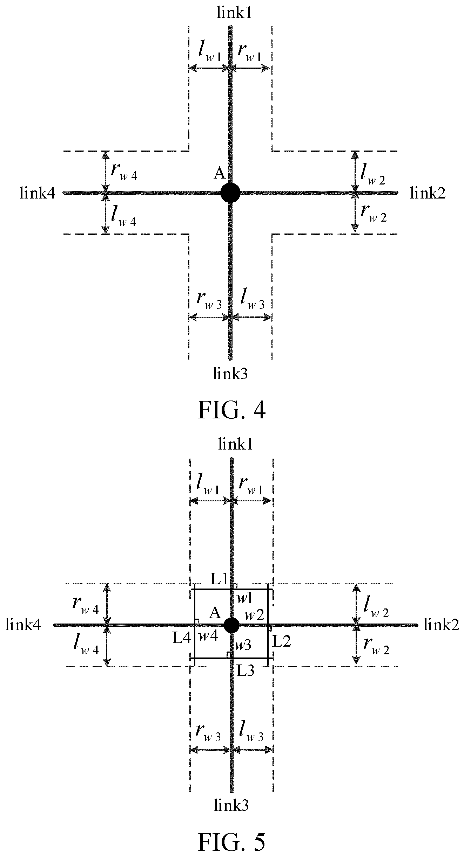

The single-node intersection shown in FIG. 2A is used as an example. FIG. 4 is a schematic diagram of a road after widening according to an embodiment of this application. As shown in FIG. 4, for the four roads (namely, link1 to link4) connected to the intersection node A, each road may be widened into a road surface with a certain width. For example, for link1, corresponding road surface width information includes road surface width information of a left side sub-road surface of link1 (namely, $l_{w1}$) and road surface width information of a right side sub-road surface of link1 (namely, $r_{w1}$). For link2, corresponding road surface width information also includes road surface width information of a left side sub-road surface of link2 (namely, $l_{w2}$) and road surface width information of a right side sub-road surface of link2 (namely, $r_{w2}$). Similarly, for road surface width information of link3 and road surface width information of link4, reference may also be made to the road surface width information of link1 and link2. Details are not described herein again.

The road described above may include but are not limited to the trunk road, the secondary trunk road, the branch road, and the like. In actual application, the road may also include an expressway, a neighborhood road, and the like, which is not specifically limited in the embodiments of this application. In addition, for the road surface width information such as $l_{w1}$, $r_{w1}$, $l_{w2}$, $r_{w2}$ shown in FIG. 4, values thereof may be the same or different. This is not specifically limited in this application.

303. Obtain a constraint condition and a target function, where the target function characterizing a size of an intersection surface of the intersection node, the target function includes an offset variable corresponding to each of at least two roads, the offset variable indicating a distance between the intersection node and a cut-off line of the corresponding one of the at least two roads, the constraint condition is configured for constraining the size, and the constraint condition includes a constraint relationship between offset variables of every two adjacent roads among the at least two roads.

In this example, for the every two adjacent roads, if corresponding cut-off lines of the two roads intersect, the generated intersection surface of the intersection node has an abnormal shape and cannot accurately reflect a real intersection surface. Therefore, to ensure that there is no abnormality in the shape of the intersection surface, it is necessary to ensure that the corresponding cut-off lines of the every two adjacent roads do not intersect. Each road is perpendicular to a corresponding cut-off line thereof, and a position of the cut-off line may be represented by a distance from an intersection of the cut-off line and the road to the intersection node. It is to be understood that the intersection of the cut-off lines mentioned in this embodiment of this application means that intersection occurs at a middle portion of the cut-off lines, which does not include a case of intersecting at an endpoint of the two cut-off lines.

In this embodiment of this application, the distance from the intersection of the cut-off line and the road to the intersection node is referred to as an offset distance. Whether the corresponding cut-off lines of the every two adjacent roads intersect depends on offset distances of the two roads. For example, in a case that the offset distance of the road is too small, the corresponding cut-off lines intersect at the middle portion of the cut-off lines, resulting in an abnormal shape of the intersection surface.

For example, FIG. 5 is a schematic diagram in which cut-off lines of a road intersect according to an embodiment of this application. As shown in FIG. 5, a cut-off line of link1 (namely, L1) intersects a cut-off line of link2 (namely, L2), and L1 and L2 intersect because a value of an offset variable of link1 (namely, $w1$) and a value of an offset variable of adjacent link2 (namely, w2) are too small. Similarly, L2 intersects a cut-off line of link3 (namely, L3). This is also because the value of w2 and a value of an offset variable of adjacent link3 (namely, w3) are too small. For an intersection of L3 and a cut-off of link4 (namely, L4) and an intersection of L4 and L1, reference may also be made to the intersection of L1 and L2 or the intersection of L2 and L3 for understanding. Details are not described herein again.

It is to be understood that an intersection of cut-off lines of the road shown in FIG. 5 is merely described by using the intersection of all four links as an example. In actual application, only two or three of the four links may intersect, which is not specifically limited in this application. In addition, the offset variable mentioned may be configured for indicating the distance between the intersection node and the cut-off line of the corresponding road. For example, w 1 may be configured for indicating a distance between the intersection node A and the cut-off line L1 of link1. After a specific value is assigned to the offset variable, it may be referred to as an offset distance.

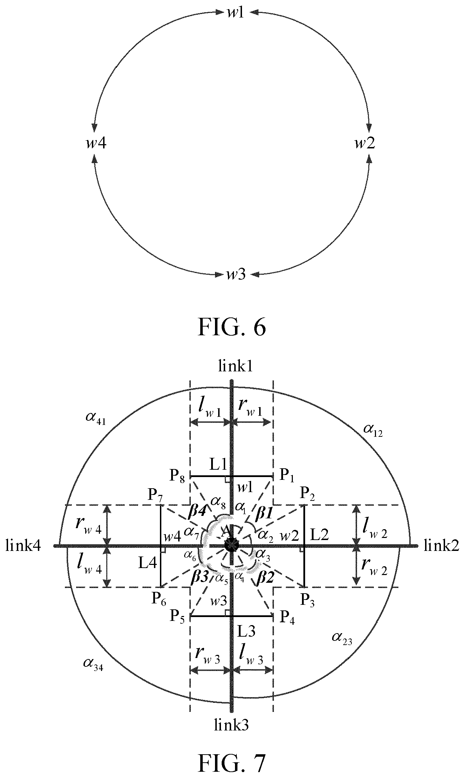

Based on this, a value of $w1$ affects a value of adj acent w2, the value of w2 affects a value of adjacent w3, the value of $w3$ affects a value of adjacent w4, and the value of $w4$ affects the value of adjacent w 1. Similarly, the value of $w1$ affects the value of adjacent w4, the value of $w4$ affects the value of adjacent w3, the value of w3 affects the value of adjacent w2, and the value of w2 affects the value of adj acent $w1$. It is clear that, regardless of whether the four links of the intersection node are sorted in a clockwise order or in an anticlockwise order, a coupling relationship between the offset variables w 1, w2, w3, and w4 is circular. For details, reference may be made to the schematic diagram of the relationship between the offset distances shown in FIG. 6 for understanding. This coupling relationship is difficult to deal with by using the pure geometric algorithm in the existing solution. Therefore, in embodiments of this application, a mathematical optimization method is used to deal with this coupling relationship, that is, the constraint relationship between the offset variables of each road is changed into a constraint equation of an optimization problem.

As described above, the cut-off line of each road is to meet the following two conditions: (1) The cut-off line is perpendicular to the road (for example: L1 is perpendicular to the link). (2) The cut-off lines do not intersect with each other, or only intersect at a cut-off endpoint. Based on this, the constraint equation that the offset variable is to meet is established by using the scenario shown in FIG. 4 as an example. For details, reference may be made to the schematic diagram in FIG. 7 in which the cut-off lines do not intersect or intersect at the endpoints of the cut-off lines for understanding.

As shown in FIG. 7, in a case that a value of the offset variable w of each road enable the cut-off line L of the corresponding roads not to intersect or only intersect at the endpoints, in this case, the constraint condition may be constructed based on the constraint relationship between the offset variables of the every two adjacent roads.

The constraint relationship between the offset variables of the every two adjacent roads may be constructed through included angle information between the every two adjacent roads. For example, the included angle information between the every two adjacent roads may be determined based on road surface width information and corresponding offset variables of the every two adjacent roads, and the constraint condition is constructed based on the included angle information between the every two adjacent roads. The mentioned included angle information is configured for indicating an intersection status between the corresponding cut-off lines of two adjacent roads. For details of the intersection status between the cut-off lines described, reference may be made to the context shown in FIG. 5 for understanding, which are not described herein again.

In addition, the constraint conditions may be constructed as follows: An included angle between a first road and a second road is obtained, where the first road and the second road are adjacent roads among the at least two roads connected to the intersection node; and obtaining a first included angle between the first road and a boundary line of a right side sub-road surface of the first road, a second included angle between the second road and a boundary line of a left side sub-road surface of the second road, and a third included angle between the boundary line of the right side sub-road surface of the first road and the boundary line of the left side sub-road surface of the second road. Then, the constraint condition is constructed based on the included angle between the first road and the second road, the first included angle, the second included angle, and the third included angle.

For example, coordinates of a road shape point of the first road and coordinates of a road shape point of the second road are firstly obtained. Then, the included angle between the first road and the second road is calculated based on the coordinates of the road shape point of the first road and the coordinates of the road shape point of the second road. On the premise that a road form of the first road and a road form of the second road are fixed, the included angle between the roads calculated based on the coordinates of the road shape point of the road is also fixed, that is, the included angle between the first road and the second road obtained is a specific value.

In addition, the first included angle may also be represented by the road surface width information of the right side sub-road surface of the first road and the offset variable of the first road. Similarly, the second included angle may also be represented by the road surface width information of the left side sub-road surface of the second road and the offset variable of the second road. The first included angle and the second included angle described are functions related to the offset variable w of the corresponding road.

For details of the left side sub-road surface and the right side sub-road surface described, reference may be made to the context described in FIG. 4 for understanding, which are not described herein again.

A sum of the foregoing first included angle, second included angle, and third included angle is less than or equal to the included angle between the first road and the second road.

For example, a schematic diagram in an upper right corner shown in FIG. 7 is used as an example, link1 in FIG. 7 may be understood as the first road, link2 may be understood as the second road, and link1 is adjacent to link2. In addition, a point A may be understood as the intersection node. An intersection point of the cut-off line L1 and the boundary line of the right side sub-road surface of link1 is P1, and an intersection point of the cut-off line L2 and the boundary line of the left side sub-road surface of link2 is P2.

The point A is used as an origin, and an included angle between link1 and link2, that is, $\alpha_{12}$, may be obtained by calculating coordinates of the road shape point of link1 and coordinates of the road shape point of link2.

Similarly, the point A is used as an origin, and the first included angle, that is, $\alpha_1$, may be obtained by calculating an angle between link1 and $P_1A$. For example, because the cut-off line L1 is perpendicular to link1, and the road surface width of the right side sub-road surface of link1 is $r_{w1}$, the road surface width of the right side sub-road surface of link1 $r_{w1}$ and the offset variable $w1$ of link1 may be processed through an inverse cut-off function, which is obtained as follows:

$$\alpha_1 = \arctan \frac{r_{w1}}{w1}$$

The second included angle may be obtained by calculating an angle between link2 and $P_2A$, that is, $\alpha_2$. For example, because the cut-off line L2 is perpendicular to link2, and the road surface width of the left side sub-road surface of link2 is $l_{w2}$, the road surface width of the left side sub-road surface of link2 $l_{w2}$ and the offset variable $w2$ of link2 may also be processed through an inverse cut-off function, which is further obtained as follows:

$$\alpha_2 = \arctan \frac{l_{w2}}{w2}$$

To ensure that L1 and L2 do not intersect or only intersect at the endpoints, an included angle $\alpha_1$ and an included angle $\alpha_2$ are to meet:

$$\alpha_1 + \alpha_2 + \min\beta_1 \leq \alpha_{12}$$

That is,

$$\alpha_1 + \alpha_2 + \min\beta_1 = \arctan \frac{r_{w1}}{w1} + \arctan \frac{l_{w2}}{w2} + \min\beta_1 \leq \alpha_{12}$$

$\min\beta_1$ is a minimum value of an included angle $P_1AP_2$, that is, the included angle between the boundary line of the right side sub-road surface of link1 and the boundary line of the left side sub-road surface of link2. In addition, $\beta_1 \geq 0$.

Generally, there are n (n>1) roads associated with the intersection node, and n constraint conditions may be constructed. For example, the intersection node A shown in FIG. 7 is associated with four roads, and in this case, four constraint conditions may be constructed for the intersection node A, which are respectively as follows:

$$\alpha_1 + \alpha_2 + \min\beta_1 = \arctan \frac{r_{w1}}{w1} + \arctan \frac{l_{w2}}{w2} + \min\beta_1 \leq \alpha_{12} (1)$$

$$\alpha_3 + \alpha_4 + \min\beta_2 = \arctan \frac{r_{w2}}{w2} + \arctan \frac{l_{w3}}{w3} + \min\beta_2 \leq \alpha_{23} (2)$$

$$\alpha_5 + \alpha_6 + \min\beta_3 = \arctan \frac{r_{w3}}{w3} + \arctan \frac{l_{w4}}{w4} + \min\beta_3 \leq \alpha_{34} (3)$$

$$\alpha_7 + \alpha_8 + \min\beta_4 = \arctan\frac{r_{w4}}{w4} + \arctan\frac{l_{w1}}{w1} + \min\beta_4 \leq \alpha_{41}(4)$$

The foregoing constraint condition (2) is constructed based on the included angle information between link2 and link3, where $\alpha_3$ is the included angle between link2 and $P_3A$, $\alpha_4$ is the included angle between link3 and $P_4A$, and $\beta_2$ is the included angle between $P_3A$ and $P_4A$. The foregoing constraint condition (3) is constructed based on the included angle information between link3 and link4, where $\alpha_5$ is the included angle between link3 and PsA, $\alpha_6$ is the included angle between link4 and $P_6A$, and $\beta_3$ is the included angle between $P_5A$ and $P_6A$. The foregoing constraint condition (4) is constructed based on the included angle information between link4 and link1, where $\alpha_7$ is the included angle between link4 and $P_7A$, $\alpha_8$ is the included angle between link1 and $P_8A$, and $\beta_4$ is the included angle between $P_7A$ and $P_8A$. For details, reference may be made to the constraint condition constructed between link1 and link2 in FIG. 7 for understanding, which are not described herein again.

In addition, on the premise that the constraint condition described above is met, it is expected that the intersection surface of the generated intersection node is as small as possible. In this case, the size of the intersection surface of the intersection node may be used as the target function, and the size may be limited by the constraint condition constructed above. The target function includes an offset variable corresponding to each of at least two roads. For the constraint relationship between each offset variable, reference may be made to the constraint condition constructed above for understanding. Details are not described herein again. In other words, the size of the intersection surface is affected by the value of the offset variable of the road associated with the intersection node. Therefore, representation of the size of the intersection surface of the intersection node may be determined based on the value of the offset variable w of the road associated with the intersection node. For example, for the intersection node A in FIG. 7, in a case that a sum of squares of the offset variables w is used as the representation of the size of the intersection surface, the size of the intersection surface may be represented as follows: $V=w1^2+w2^2+w3^2+w4^2$, where w 1, w2, w3, and w4 are corresponding offset variables of link1, link2, link3, and link4.

In addition to using the sum of the squares of the offset variables to represent the size of the intersection surface, in practical application, it may also be expressed through a sum of cubes of the offset variables, a sum of $N^{th}$ ($N \geq 2$) powers, a sum of absolute values, and the like. This is not specifically limited in this embodiment of this application.

In this way, the target function about the size of the intersection surface may be constructed, that is, min $V=w1^2+w2^2+w3^2+w4^2$.

304. For each of the at least two roads, determine an offset distance of the respective road by using the target function and the constraint condition based on the road surface width information of the road.

In this example, after the constraint condition is constructed and the target function is obtained through the operation of step 303, the target function may be solved and calculated based on the road surface width information and the constraint condition of the road, and then a specific value of each offset variable in the target function is calculated, that is, the offset distance of each road is obtained. For example, after the constraint condition and the target function are constructed, an optimization mathematical model corresponding to the intersection node in FIG. 7 in this application may be constructed as follows:

$$\min V=w1^2+w2^2+w3^2+w4^2$$

s.t.

$$\alpha_1 + \alpha_2 + \min\beta_1 = \arctan\frac{r_{w1}}{w1} + \arctan\frac{l_{w2}}{w2} + \min\beta_1 \leq \alpha_{12}$$

$$\alpha_3 + \alpha_4 + \min\beta_2 = \arctan\frac{r_{w2}}{w2} + \arctan\frac{l_{w3}}{w3} + \min\beta_2 \leq \alpha_{23}$$

$$\alpha_5 + \alpha_6 + \min\beta_3 = \arctan\frac{r_{w3}}{w3} + \arctan\frac{l_{w4}}{w4} + \min\beta_3 \leq \alpha_{34}$$

$$\alpha_7 + \alpha_8 + \min\beta_4 = \arctan\frac{r_{w4}}{w4} + \arctan\frac{l_{w1}}{w1} + \min\beta_4 \leq \alpha_{41}$$

$$w1 > 0$$

$$w2 > 0$$

$$w3 > 0$$

$$w4 > 0$$

In this way, under the constraint condition and the road surface width information of the road, the target function may be solved based on a preset constraint optimization model such as an interior point method. For example, after the road surface width information of each road (including the road surface width information of the left side sub-road surface and the road surface width information of the right side sub-road surface) is obtained, the road surface width information of each road may be processed through the preset constraint optimization model, to obtain a value of the offset variable of each road which is an optimal solution of the target function as the offset distance of each road.

305. Generate the intersection surface of the intersection node in a map based on the road surface width information and the offset distance of the road.

In this example, after the offset distance of each road through calculation is obtained, the intersection surface of the intersection node in a map can be generated based on the road surface width information of each road and the corresponding offset distance. For example, the position of the intersection shape point may be determined based on the road surface width information of each road and the corresponding offset distance of each road. In this way, after the position of the intersection shape point is obtained, the intersection surface of the intersection node may be generated based on the position of the intersection shape point. The intersection shape point described may indicate a regional contour feature of the intersection surface. For example, eight intersection shape points $P_1$ to $P_8$ in FIG. 7 may accurately describe the regional contour of the intersection surface.

For example, the position of each intersection shape point may also be determined in the following manners: calculating the coordinates of the first intersection shape point based on the road surface width information of the right side sub-road surface of the first road and the offset distance of the first road, the first intersection shape point is the intersection point between the cut-off line of the first road and the boundary line of the right side sub-road surface of the first road, and the coordinates of the first intersection shape point is configured for indicating the position of the first intersection shape point; and calculating the coordinates of the second intersection shape point based on the road surface width information of the left side sub-road surface of the second road and the offset distance of the second road, where the second intersection shape point is the intersection point between the cut-off line of the second road and the boundary line of the left side sub-road surface of the second road, and the coordinates of the second intersection shape point are configured for indicating the position of the second intersection shape point. Then, the intersection surface of the intersection node may be generated by connecting the coordinates of the first intersection shape point and the coordinates of the second intersection shape point.

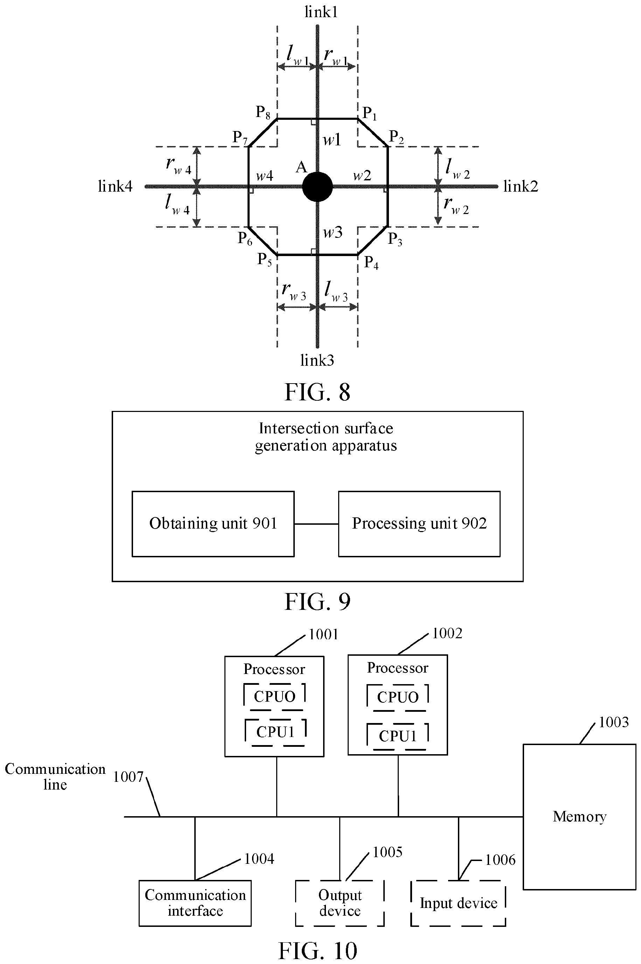

For example, an example in which $P_1$ in FIG. 8 is the first intersection shape point and $P_2$ in FIG. 8 is the second intersection shape point is used, the road surface width information of the right side sub-road surface of link1, that is, $r_{w1}$, is calculated above, and the specific value of the offset variable $w1$ of link1 is calculated in step 304. In this case, the intersection node A needs to be used as an origin, and the coordinates of P1 may be calculated based on the Pythagorean theorem. Similarly, the road width information of the left side sub-road surface of link2 is calculated above, that is $l_{w2}$, and the specific value of the offset variable w2 of link2 is calculated in step 304. In this case, the intersection node A needs to be used as the origin, and the coordinates of P2 point may be calculated through the Pythagorean theorem.

Based on the same principle, the coordinates of remaining intersection shape points (namely, $P_3$ to $P_8$) may be obtained through solving, and the intersection shape points are connected by using straight lines to obtain the intersection surface. For details, reference may be made to the schematic diagram of the intersection surface shown in FIG. 8 for understanding.

In some examples, after the intersection surface is generated, the intersection surface may also be displayed through a terminal device.

In embodiments of this application, the road information of the intersection node is obtained, and the road surface width information of each road is determined based on the road information, and the constraint condition and the target function are obtained. The target function is configured for indicating the size of the intersection surface of the intersection node. The constraint condition includes the constraint relationship between the corresponding offset variables of every two adjacent roads in the at least two roads and is configured for indicating the limiting condition of the size. The target function includes at least two offset variables. In this way, the offset distance of each road may be calculated based on the road surface width information of the road, the constraint condition, and the target function. Further, the intersection surface of the intersection node may be generated in the map based on the road surface width information of the road and the offset distance of the road. Through the foregoing manner, it is only necessary to construct the constraint condition based on the constraint relationship between the offset variables of adj acent roads, and calculate the offset distance of the road based on the road surface width information of the road, to generate the intersection surface of the intersection node efficiently and accurately without relying on the complex pure geometric algorithm. In some scenarios with complex roads, a corresponding accurate offset distance may be calculated by modifying the constraint condition, which is highly scalable and may be widely used in various map scenarios to generate the intersection surface efficiently and accurately in various map scenarios.

The solutions provided in embodiments of this application are mainly described above from a perspective of a method. It may be understood that, to implement the foregoing functions, a corresponding hardware structure/or a corresponding software module for performing each function is included. A person skilled in the art is to be easily aware that, in combination with the examples described in the embodiments disclosed in this present application, modules and algorithm steps can be implemented in this application in a form of hardware or a combination of hardware and computer software. Whether a function is performed through hardware or hardware driven by computer software depends on particular applications and design constraint conditions of the technical solutions. A person skilled in the art may use different methods to implement the described functions for each particular application, but it is to not be considered that the implementation goes beyond the scope of this application.

In embodiments of this application, the apparatus may be divided into functional modules based on the foregoing method examples. For example, the apparatus may be division functional modules corresponding to functions, or two or more functions may be integrated into one processing module. The foregoing integrated module may be implemented in a form of hardware, or may be implemented in a form of a software functional module. In embodiments of this application, division into modules is an example and is merely logical function division, and may be other division in actual implementation.

The following describes intersection surface generation apparatus provided in embodiments of this application in detail. FIG. 9 is a schematic diagram of an embodiment of an intersection surface generation apparatus according to an embodiment of this application. As shown in FIG. 9, the intersection surface generation apparatus may include an obtaining unit 901 and a processing unit 902.

The obtaining unit 901 is configured to obtain road information of an intersection node, where the road information indicates at least two roads connected to the intersection node.

The processing unit 902 is configured to determine road surface width information of each of the at least two roads based on the road information.

The obtaining unit 901 is further configured to obtain a constraint condition and a target function. The target function characterizes a size of an intersection surface of the intersection node, the target function includes an offset variable corresponding to each of the at least two roads. The offset variable indicates a distance between the intersection node and a cut-off line of the corresponding one of the at least two roads. The constraint condition is configured for constraining the size. The constraint condition includes a constraint relationship between offset variables of every two adjacent roads among the at least two roads.

The processing unit 902 is further configured to, for each of the at least two roads, determine an offset distance of the respective road by using the target function and the constraint condition based on the road surface width information of the road, and generate the intersection surface of the intersection node in a map based on the road surface width information of the road and the offset distance of the road.

In some optional examples, the processing unit 902 is configured to, for every two adjacent roads, determine included angle information between the two adjacent roads based on the road surface width information of the two adjacent roads and the offset variables of the two adjacent roads. The included angle information indicates an intersection status between cut-off lines of the two adjacent roads and construct the constraint condition based on the included angle information between the two adjacent roads.

In some optional examples, the road surface of each road includes a left side sub-road surface and a right side sub-road surface. The obtaining unit 901 is further configured to obtain an included angle between a first road and a second road, where the first road and the second road are adjacent roads among the at least two roads; and obtain a first included angle between the first road and a boundary line of the right side sub-road surface of the first road, a second included angle between the second road and a boundary line of the left side sub-road surface of the second road, and a third included angle between the boundary line of the right side sub-road surface of the first road and the boundary line of the left side sub-road surface of the second road.

The processing unit 902 is specifically configured to construct the constraint condition based on the included angle between the first road and the second road, the first included angle, the second included angle, and the third included angle.

In some other optional examples, a sum of the first included angle, the second included angle, and third included angle is less than or equal to the included angle between the first road and the second road.

In some other optional examples, the obtaining unit 901 is specifically configured to obtain coordinates of a road shape point of the first road and coordinates of a road shape point of the second road. The processing unit 902 is specifically configured to calculate the included angle between the first road and the second road based on the coordinates of the road shape point of the first road and the coordinates of the road shape point of the second road.

In some other optional examples, the first included angle may also be represented by the road surface width information of the right side sub-road surface of the first road and the offset variable of the first road.

In some other optional examples, the second included angle may also be represented by the road surface width information of the left side sub-road surface of the second road and the offset variable of the second road.

In some other optional examples, the processing unit 902 is specifically configured to, for each of the at least two roads, determine a road level of the road based on the road information; and determine the road surface width information of the road based on the road level of the road.

In some other optional examples, the processing unit 902 is specifically configured to determine a position of an intersection shape point based on the road surface width information and the offset distance of the road, where the intersection shape point is configured for indicating a road regional contour feature of the intersection surface; and generate the intersection surface of the intersection node in the map based on the position of the intersection shape point.

In some other optional examples, the road surface width information of the road includes road surface width information of the left side sub-road surface of the road and road surface width information of the right side sub-road surface of the road. The processing unit 902 is specifically configured to calculate coordinates of a first intersection shape point based on the road surface width information of the right side sub-road surface of the first road and an offset distance of the first road, where the first intersection shape point is an intersection point between a cut-off line of the first road and the boundary line of the right side sub-road surface of the first road; calculate coordinates of a second intersection shape point based on the road surface width information of the left side sub-road surface of the second road and an offset distance of the second road, where the second intersection shape point is an intersection point between a cut-off line of the second road and the boundary line of the left side sub-road surface of the second road, and the first road and the second road are adjacent roads among the at least two roads; and connect the coordinates of the first intersection shape point and the coordinates of the second intersection shape point, to generate the intersection surface of the intersection node.

In some other optional examples, the processing unit 902 is specifically configured to determine the offset distance of the road based on a preset constraint optimization model and the target function in a case that the constraint condition and the road surface width information of the road are known.

The intersection surface generation apparatus in this embodiment of the present invention is described above from a perspective of a modular functional entity. The following describes a computer device configured to perform the intersection surface generation method in embodiments of this application from a perspective of hardware processing. FIG. 10 is a schematic diagram of a hardware structure of a computer device according to an embodiment of this application. The intersection surface generation apparatus may vary greatly due to different configurations or performance. The intersection surface generation apparatus may include at least one processor 1001, a communication line 1007, a memory 1003, and at least one communication interface 1004.

The processor 1001 may be a general-purpose central processing unit (CPU), a microprocessor, an application-specific integrated circuit (which is a server IC), or one or more integrated circuits configured to control execution of programs in solutions of this application.

The communication line 1007 may include a path for transmitting information between the foregoing components.

The communication interface 1004 uses any apparatus such as a transceiver, and is configured to communicate with another apparatus or a communication network, for example, the Ethernet, a radio access network (RAN), or a wireless local area network (WLAN).

The memory 1003 may be a read-only memory (ROM) or another type of static storage apparatus that may store information and instructions, a random access memory (RAM) or another type of dynamic storage apparatus that may store information and instructions. The memory may be independent and connected to the processor through the communication line 1007. The memory may be integrated into the processor.

The memory 1003 is configured to store computer-executable instructions for executing the solutions of this application, and the processor 1001 controls the execution. The processor 1001 is configured to execute the computer-executable instructions stored in the memory 1003, to implement the method for generating an intersection surface provided in the foregoing embodiments of this application.

In some embodiments, the computer-executable instructions in embodiments of this application may also be referred to as application program code, which is not specifically limited in embodiments of this application.

In a specific implementation, in an embodiment, the computer device may include a plurality of processors, for example, the processor 1001 and a processor 1002 shown in FIG. 10. Each of these processors may be a single core central processing unit (single-CPU), or may be a multi-core central processing unit (multi-CPU). The processor herein may be one or more apparatuses, circuits, and/or processing cores configured to process data (such as computer program instructions).

In a specific implementation, in an embodiment, the computer device may further include an output device 1005 and an input device 1006. The output device 1005 communicates with the processor 1001, and may display information in a plurality of manners. The input device 1006 communicates with the processor 1001, and may receive input from a target object in a plurality of manners. For example, the input device 1006 may be a mouse, a touchscreen apparatus, a sensing apparatus, and the like.

The foregoing computer device may be a general-purpose apparatus or a dedicated apparatus. In a specific implementation, the computer device may be a server, a terminal, or the like, or an apparatus having a structure similar to that in FIG. 10. A type of the computer device is not limited in embodiments of this application.

The processor 1001 in FIG. 10 may invoke the computer-executable instructions stored in the memory 1003, so that the computer device performs the method corresponding to the method embodiment in FIG. 3.

Specifically, functions/implementation processes of the processing unit 902 in FIG. 9 may be implemented by the processor 1001 in FIG. 10 by invoking the computer-executable instructions stored in the memory 1003. Functions/implementation processes of the obtaining unit 901 in FIG. 9 may be implemented by using the communication interface 1004 in FIG. 10.

All or a part of the foregoing embodiments may be implemented through software, hardware, firmware, or any combination thereof. When software is used to implement the embodiments, all or a part of the embodiments may be implemented in a form of a computer program product.

It may be clearly understood by a person skilled in the art that for convenient and brief description, for a detailed working process of the foregoing system, apparatus, and unit, refer to a corresponding process in the foregoing method embodiments, and details are not described herein again.

In the several embodiments provided in this application, it may be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate. Parts displayed as units may or may not be physical units, to be specific, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of a software functional unit and sold or used as an independent product, the integrated unit may be stored in a computer-readable storage medium. Based on such an understanding, the technical solutions of this application essentially, or a part contributing to the related art, or all or some of the technical solutions may be implemented in a form of a software product. The computer software product is stored in a storage medium and includes a plurality of instructions for instructing a computer device (which may be a personal computer, a server, a network device, or the like) to perform all or some of the steps of the methods in embodiments of this application. The foregoing storage medium includes any medium that may store program code, such as a USB flash drive, a removable hard disk, a read-only memory (ROM), a random access memory (RAM), a magnetic disk, or an optical disc.

All or a part of the foregoing embodiments may be implemented by software, hardware, firmware, or any combination thereof. When software is used to implement embodiments, all or a part of embodiments may be implemented in a form of a computer program product.

The computer program product includes one or more computer instructions. When the computer-executable instructions are loaded and executed on a computer, the procedures, or functions based on embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, an SSD), or the like.

The foregoing embodiments are merely intended to describe the technical solutions of this application, but not intended to limit this application. Although this application is described in detail with reference to the foregoing embodiments, a person of ordinary skill in the art is to understand that they may still make modifications to the technical solutions described in the foregoing embodiments or make equivalent replacements to some technical features thereof, without departing from the scope of the technical solutions of the embodiments of this application.

**Claims**

1.  A method for generating an intersection surface, executable by a computer device, comprising:

    obtaining road information of an intersection node, the road information indicating at least two roads connected to the intersection node;
    determining road surface width information of each of the at least two roads based on the road information;
    obtaining a constraint condition and a target function, the target function characterizing a size of an intersection surface of the intersection node, the target function comprising an offset variable corresponding to each of the at least two roads, the offset variable indicating a distance between the intersection node and a cut-off line of the corresponding one of the at least two roads, the constraint condition being configured for constraining the size, and the constraint condition comprising a constraint relationship between offset variables of every two adjacent roads among the at least two roads;
    for each of the at least two roads, determining an offset distance of the respective road by using the target function and the constraint condition based on the road surface width information of the road; and
    generating the intersection surface of the intersection node in a map based on the road surface width information of the road and the offset distance of the road.

2.  The method according to claim 1, wherein the obtaining a constraint condition comprises:
    for every two adjacent roads,

    determining included angle information between the two adjacent roads based on road surface width information and the offset variables of the two adjacent roads, the included angle information indicating an intersection status between cut-off lines of the two adjacent roads; and
    constructing the constraint condition based on the included angle information between the two adjacent roads.

3.  The method according to claim 2, wherein a road surface of each of the at least two roads comprises a left side sub-road surface and a right side sub-road surface, and the constructing the constraint condition based on the included angle information between the two adjacent roads comprises:

    obtaining an included angle between a first road and a second road, wherein the first road and the second road are adjacent roads among the at least two roads;
    obtaining a first included angle between the first road and a boundary line of the right side sub-road surface of the first road, obtaining a second included angle between the second road and a boundary line of the left side sub-road surface of the second road, and obtaining a third included angle between the boundary line of the right side sub-road surface of the first road and the boundary line of the left side sub-road surface of the second road; and
    constructing the constraint condition based on the included angle between the first road and the second road, the first included angle, the second included angle, and the third included angle.

4.  The method according to claim 3, wherein a sum of the first included angle, the second included angle, and the third included angle is less than or equal to the included angle between the first road and the second road.

5. The method according to claim 3 or 4, wherein the obtaining an included angle between a first road and a second road comprises:

   obtaining coordinates of a road shape point of the first road and coordinates of a road shape point of the second road; and
   calculating the included angle between the first road and the second road based on the coordinates of the road shape point of the first road and the coordinates of the road shape point of the second road.

6. The method according to claim 3 or 4, wherein the first included angle is represented by road surface width information of the right side sub-road surface of the first road and an offset variable of the first road.

7. The method according to claim 3 or 4, wherein the second included angle is represented by road surface width information of the left side sub-road surface of the second road and an offset variable of the second road.

8. The method according to any one of claims 1 to 4, wherein the determining road surface width information of each of the at least two roads based on the road information comprises: for each of the at least two roads,

   determining a road level of the road based on the road information; and
   determining the road surface width information of the road based on the road level of the road.

9. The method according to any one of claims 1 to 4, wherein the generating the intersection surface of the intersection node in a map based on the road surface width information of the road and the offset distance of the road comprises:

   determining a position of an intersection shape point based on the road surface width information and an offset distance of each of the at least two roads, the intersection shape point indicating a regional contour feature of the intersection surface; and
   generating the intersection surface of the intersection node in the map based on the position of the intersection shape point.

10. The method according to claim 9, wherein the road surface width information of the road comprises road surface width information of the left side sub-road surface of the road and road surface width information of the right side sub-road surface of the road; the determining a position of an intersection shape point based on the road surface width information and an offset distance of each of the at least two roads comprises:

    calculating coordinates of a first intersection shape point based on the road surface width information of the right side sub-road surface of the first road and an offset distance of the first road, the first intersection shape point being an intersection point between a cut-off line of the first road and the boundary line of the right side sub-road surface of the first road; and
    calculating coordinates of a second intersection shape point based on the road surface width information of the left side sub-road surface of the second road and an offset distance of the second road, the second intersection shape point being an intersection point between a cut-off line of the second road and the boundary line of the left side sub-road surface of the second road; and the first road and the second road being adjacent roads among the at least two roads; and
    the generating the intersection surface of the intersection node based on the position of the intersection shape point comprises:
    connecting the coordinates of the first intersection shape point and the coordinates of the second intersection shape point to generate the intersection surface of the intersection node.

11. The method according to any one of claims 1 to 4, wherein the determining an offset distance of the respective road by using the target function and the constraint condition based on the road surface width information of the road comprises:
    determining the offset distance of the road based on a preset constraint optimization model and the target function in a case that the constraint condition and the road surface width information of the road are known.

12. An intersection surface generation apparatus, comprising:

an obtaining unit, configured to obtain road information of an intersection node, the road information indicating at least two roads connected to the intersection node; and

a processing unit, configured to determine road surface width information of each of the at least two roads based on the road information, wherein

the obtaining unit is further configured to obtain a constraint condition and a target function, the target function characterizing a size of an intersection surface of the intersection node, the target function comprising an offset variable corresponding to each of the at least two roads, the offset variable indicating a distance between the intersection node and a cut-off line of the corresponding one of the at least two roads, the constraint condition being configured for constraining the size, and the constraint condition comprising a constraint relationship between offset variables of every two adjacent roads among the at least two roads;

the processing unit is further configured to, for each of the at least two roads, determine an offset distance of the respective road by using the target function and the constraint condition based on the road surface width information of the road; and

the processing unit is further configured to generate the intersection surface of the intersection node in a map based on the road surface width information of the road and the offset distance of the road.

13. A computer device, comprising a processor and a memory, program instructions being stored in the memory; and the processor is configured to perform the method according to any one of claims 1 to 11 by executing the program instructions stored in the memory.

14. A computer-readable storage medium, comprising instructions, the instructions, when run on a computer device, causing the computer device to perform the method according to any one of claims 1 to 11.

15. A computer program product, comprising computer instructions, the instructions, when run on a computer device, causing the computer device to perform the method according to any one of claims 1 to 11.

FIG. 1

Single-node intersection

FIG. 2A

Compound-node intersection

FIG. 2B

Obtain road information of an intersection node, the road information indicating two roads connected to the intersection node

301

Determine road surface width information of each of the at least two roads based on the road information

302

Obtain a constraint condition and a target function, where the target function characterizes a size of an intersection surface of the intersection node, the target function includes an offset variable corresponding to each of the at least two roads, the offset variable indicates a distance between the intersection node and a cut-off line of the corresponding one of the at least two roads, the constraint condition is configured for constraining the size, and the constraint condition includes a constraint relationship between offset variables of every two adjacent roads among the at least two roads

303

For each of the at least two roads, determine an offset distance of the respective road by using the target function and the constraint condition based on the road surface width information of the road

304

Generate the intersection surface of the intersection node in a map based on the road surface width information of the road and the offset distance of the road

305

FIG. 3

FIG. 4

FIG. 5

FIG. 6

FIG. 7

link1

$l_{w1}$ $r_{w1}$

$P_8$ $P_1$

$w1$

$P_7$ $P_2$

$r_{w4}$

link4 $w4$ A $w2$ link2

$l_{w4}$ $r_{w2}$

$P_6$ $w3$ $P_3$

$P_5$ $P_4$

$r_{w3}$ $l_{w3}$

link3

FIG. 8

Intersection surface
generation apparatus

Obtaining unit 901 — Processing unit 902

FIG. 9

1001 1002

Processor Processor

⌈ CPU0 ⌉ ⌈ CPU0 ⌉

⌊CPU1⌋ ⌊CPU1⌋

1003

Communication 1007
line

Memory

1004 1005 1006

Communication Output Input device
interface device

FIG. 10

## INTERNATIONAL SEARCH REPORT

| | International application No. |
|---|---|
| | **PCT/CN2023/077329** |

| A. | CLASSIFICATION OF SUBJECT MATTER |
|---|---|

G06F30/18(2020.01)i;G01C21/32(2006.01)i;G01C21/36(2006.01)i

According to International Patent Classification (IPC) or to both national classification and IPC

| B. | FIELDS SEARCHED |
|---|---|

Minimum documentation searched (classification system followed by classification symbols)

G06F30/-,G01C21/-

Documentation searched other than minimum documentation to the extent that such documents are included in the fields searched

Electronic data base consulted during the international search (name of data base and, where practicable, search terms used)

CJFD, CNTXT, DWPI, ENTXTC, JPTXT, VEN, IEEE, 百度, BAIDU: 道路面, 路口面, 路口, 地图, 交叉, 目标函数, 约束, 约束条件, 垂线, 宽度, 距离, 偏置, 偏移, 夹角, map, intersection, crossing, objective function, constraint, constraint condition, vertical line, width, distance, shift, angle, optimum

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 109752009 A (HUAWEI TECHNOLOGIES CO., LTD.) 14 May 2019 (2019-05-14) entire document | 1-15 |
| A | CN 113899384 A (TENCENT TECHNOLOGY (SHENZHEN) CO., LTD.) 07 January 2022 (2022-01-07) entire document | 1-15 |
| A | CN 114386536 A (TENCENT TECHNOLOGY (SHENZHEN) CO., LTD.) 22 April 2022 (2022-04-22) entire document | 1-15 |
| A | US 2020311991 A1 (BAIDU ONLINE NETWORK TECHNOLOGY (BEIJING) CO., LTD.) 01 October 2020 (2020-10-01) entire document | 1-15 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 April 2023** | **09 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/077329**

| Patent document cited in search report | | | Publication date (day/month/year) | Patent family member(s) | | | Publication date (day/month/year) |
|---|---|---|---|---|---|---|---|
| CN | 109752009 | A | 14 May 2019 | WO | 2019086055 | A2 | 09 May 2019 |
| | | | | WO | 2019086055 | A3 | 27 June 2019 |
| | | | | US | 2020256698 | A1 | 13 August 2020 |
| | | | | US | 11454513 | B2 | 27 September 2022 |
| | | | | EP | 3693701 | A2 | 12 August 2020 |
| | | | | EP | 3693701 | A4 | 07 April 2021 |
| | | | | CN | 109752009 | B | 06 January 2023 |
| CN | 113899384 | A | 07 January 2022 | CN | 113899384 | B | 22 February 2022 |
| CN | 114386536 | A | 22 April 2022 | CN | 114386536 | B | 01 July 2022 |
| | | | | HK | 40068467 | A0 | 23 September 2022 |
| US | 2020311991 | A1 | 01 October 2020 | KR | 20200115173 | A | 07 October 2020 |
| | | | | KR | 102293479 | B1 | 24 August 2021 |
| | | | | JP | 2020160448 | A | 01 October 2020 |
| | | | | JP | 6966588 | B2 | 17 November 2021 |
| | | | | US | 11120587 | B2 | 14 September 2021 |
| | | | | EP | 3715792 | A1 | 30 September 2020 |
| | | | | EP | 3715792 | B1 | 02 March 2022 |
| | | | | CN | 109949389 | A | 28 June 2019 |

Form PCT/ISA/210 (patent family annex) (July 2022)

**REFERENCES CITED IN THE DESCRIPTION**

**Patent documents cited in the description**

- CN 2022106120660